# NEUE EUROPÄISCHE PATENTSCHRIFT

(11) **EP 1 131 220 B2**
(45) Veröffentlichungstag und Bekanntmachung des Hinweises auf die Entscheidung über den Einspruch: **26.08.2009**
(45) Hinweis auf die Patenterteilung: 15.11.2006
(21) Anmeldenummer: 00964143.2
(22) Anmeldetag: 08.09.2000
(51) Int. Cl.: B60J 10/10, B60J 10/00, B60J 10/06

(54) **FENSTERDICHTUNGSPROFIL FÜR EIN KABRIOLETT**
WINDOW SEALING STRIP FOR A CONVERTIBLE
PROFILE D'ETANCHEITE POUR UNE FENETRE DE VOITURE DECAPOTABLE

(30) Priorität: 17.09.1999 DE 29916352 U
(43) Veröffentlichungstag der Anmeldung: 12.09.2001
(73) Patentinhaber: Meteor Gummiwerke K.H. Bädje GmbH & Co. KG, 31167 Bockenem (DE)
(72) Erfinder: ANDERS, Jens, 31094 Marienhagen (DE); GENTEMANN, Martin, 31177 Harsum (DE)
(74) Vertreter: Sobisch, Peter
(86) Internationale Anmeldenummer: PCT/EP2000/008780
(87) Internationale Veröffentlichungsnummer: WO 2001/021426

(56) Entgegenhaltungen:
- EP-A- 0 587 428
- WO-A1-20/01/21426
- DE-A1- 3 921 760
- DE-A1- 4 126 273
- DE-A1- 19 531 167
- DE-C- 4 441 667
- DE-C2- 3 929 159
- DE-U- 29 715 485
- DE-U- 29 916 352
- GB-A- 2 074 639
- US-A- 5 209 019
- US-A- 5 882 766

## Beschreibung

Die Erfindung betrifft ein Dichtungsprofil nach dem Oberbegriff des Anspruchs 1.

Ein bekanntes Dichtungsprofil dieser Art (DE 198 11 362 A1) ist an eine Kraftfahrzeugkarosserie durch Aufstecken auf einen Falz der Karosserie angesetzt. Zur Befestigung des Dichtungsprofils an der Karosserie dienen Vorsprünge des Halteabschnitts, die an beiden Seiten des Falzes gegen diesen vorstehen.

Bei einem an sich bekannten Dichtungsprofil (WO 97/00180 A1; Fig. 2, 3, 6 und 7) tritt die Fensterscheibe mit zwei gegenüberliegenden Dichtlippen in Berührung. Die Dichtlippen bilden Längskanten des Elastomerprofilstrangs. Die Befestigungselemente durchdringen den Eiastomerprofilstrang und die Trägerschiene und werden durch die Dichtlippen hindurch an dem Anschlußteil montiert. Oberhalb der Dichtlippen kann sich innerhalb des Dichtungsprofils in unerwünschter Weise Staub und/oder Feuchtigkeit ansammeln. Außerdem muss das Dichtungsprofil in Abschnitte abgelängt und jeder Abschnitt mit aufwendigen Werkzeugen in die benötigte dreidimensionale Form streckgebogen werden.

Aus der DE 39 21 760 C2 ist an sich für heb- und senkbare Fensterscheiben von Kraftfahrzeugen vorgesehenes Dichtungsprofil bekannt, das auf einen Flansch eines Fensterrahmens aufgesteckt ist.

Aus der DE 295 02 105 U1 ist es an sich bekannt, in einem U-förmigen Klemmabschnitt eines Dichtungsprofils eine als Wendeldrahtkörper ausgebildete U-förmige Armierung anzuordnen. An einen Steg des Klemmabschnitts ist ein schlauchförmiger Dichtungsabschnitt des Dichtungsprofils angeformt.

Es ist an sich bekannt, eine Halteschiene als Aluminium-Strangpreßprofil herzustellen, durch Streckbiegen in die gewünschte dreidimensionale Form zu bringen und mit Befestigungselementen an dem Anschlußteil zu befestigen. Erst danach wird an der Kfz-Montagelinie der Elastomerprofilstrang in beidseitige Aufnahmen der Halteschiene eingesetzt. Dies ist zeit- und kostenaufwendig.

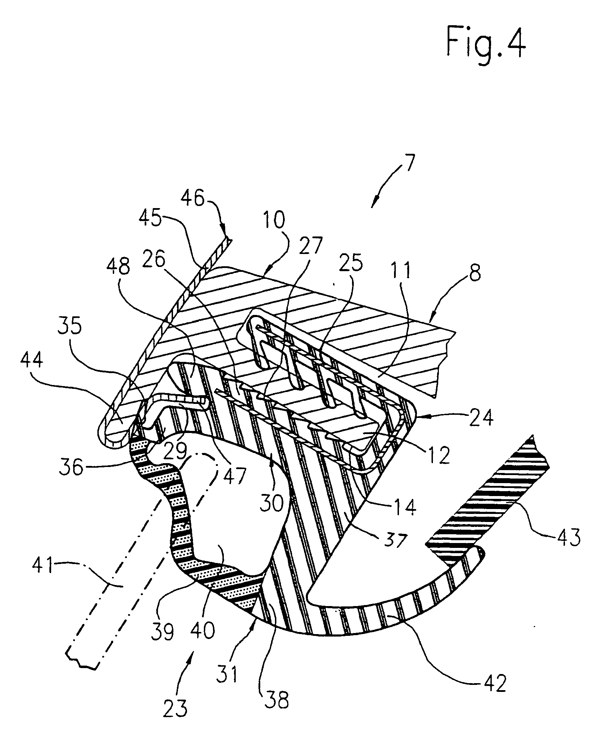

Aus der GB 2 074 639 A ist es an sich bekannt, ein im Querschnitt im Wesentlichen L-förmiges Halteelement aus Blech mit Schrauben an einem Dachrahmen zu befestigen. Bevor die Schrauben festgezogen werden, wird gemäß Fig. 4 ein Randbereich einer Schlauchdichtung hinter eine Längskante des Halteelements gesteckt. Nach dem Festziehen der Schrauben wird ein Klemmprofil der Schlauchdichtung auf einen der Längskante gegenüberliegenden Quersteg des Halteelements gesteckt.

Gemäß der DE 297 15 485 U1 ist es an sich bekannt, ein metallisches Tragprofil mit im Abstand gegenüberliegenden Vorsprüngen zu versehen. Über die Vorsprünge werden komplementäre Ansätze einer schlauchförmigen Dichtungsleiste geclipst oder geschoben.

Ein gattungsgemäßes Dichtungsprofil ist aus dem Dokument US 5 209 019 bekannt.

Der Erfindung liegt die Aufgabe zugrunde, das Dichtungsprofil so auszubilden, dass der erste Schenkel des Halteabschnitts in besonders günstiger Dichtanlage an dem Aufsteckflansch des Anschlussteils gehalten wird.

Diese Aufgabe ist durch die Merkmale des Anspruchs 1 gelöst. Dadurch, dass in die Längsnut der formstabile Randflansch des Daches des Kabrioletts eingreift, kann der erste Schenkel des Halteabschnitts gegen den Aufsteckflansch gedrückt werden. Dies trägt zu einem festen und dichten Sitz des Halteabschnitts auf dem Aufsteckflansch bei.

Das zu dem Dachrahmen gehörende Dach kann ein Faltverdeck oder ein mehrteiliges, festes Klappdach sein. Der Dachrahmen kann gegebenenfalls auch die A-Säule des Kabrioletts umfassen. Die Armierung besteht z.B. aus metallischem Stanzband oder weist einen Wendeldrahtkörper auf. Der Elastomerprofilstrang ist gegebenenfalls aus mehreren unterschiedlichen Elastomeren koextrudiert. Vorzugsweise wird das Dichtungsprofil so hergestellt, dass zunächst die ebene Armierung in den Elastomerprofilstrang einextrudiert wird. Nach der Koextrusion wird der Halteabschnitt mitsamt der darin eingeformten Armierung in eine U-Form gebogen. Ein Streckbiegen des so fertiggestellten Dichtungsprofils entfällt. Vielmehr wird das Dichtungsprofil mit seinem Halteabschnitt einfach auf den Aufsteckflansch des Anschlussteils aufgesteckt. Dank der dreidimensionalen Verformbarkeit der Armierung ist auch das gesamte Dichtungsprofil leicht in eine endgültige dreidimensionale Form biegbar und in dieser Form am Anschlussteil montierbar. Dazu sind keinerlei Befestigungselemente, z.B. Schrauben, erforderlich, was sich günstig auf den Montageaufwand am Fertigungsband der Kabrioletts auswirkt. Aufgrund der seitlichen Anformung des Dichtungsabschnitts an dem ersten Schenkel des Halteabschnitts weist das Dichtungsprofil eine besonders kompakte und funktionssichere Bauweise auf. Die Wirkung des festen und sicheren Sitzes des Halteabschnitts auf dem Aufsteckflansch wird auch durch die Gestaltung der Endlippe des ersten Schenkels unterstützt. Gleichzeitig ergibt sich aufgrund der Anordnung der Endlippe eine formschlüssige Verriegelung des Dichtungsprofils gegenüber dem Anschlussteil.

Die Ausbildung des Randflansches gemäß Anspruch 2 oder 3 ist jeweils einfach und funktionssicher.

Die Merkmale des Anspruchs 4 verbessern die Abdichtung des zugehörigen Spalts gegen Feuchtigkeit und Geräusche.

Diese Wirkung wird gemäß Anspruch 5 oder 6 noch verbessert.

Gemäß Anspruch 7 entsteht in dem Elastomerprofilstrang ein Hohlraum, in den die Fensterscheibe beim Schließen teilweise eintaucht. Da dieser Hohlraum normalerweise hermetisch abgedichtet ist, kann weder Staub noch Feuchtigkeit in den Hohlraum eindringen und nachteilig auf die Fensterscheibe einwirken.

Gemäß Anspruch 8 ergibt sich eine gute Abdichtung zwischen der geschlossenen Fensterscheibe und der Membran.

Gemäß Anspruch 9 kann der Weichgummi z.B. eine Härte von 60 Shore A und der Moosgummi eine Härte von z.B. 15 Shore A aufweisen. Weichgummi und Moosgummi werden vorzugsweise im Duplexverfahren gemeinsam mit der Armierung koextrudiert.

Gemäß Anspruch 10 oder 11 ergeben sich kostengünstige und in jeder Hinsicht funktionstüchtige Armierungen.

Diese und weitere Vorteile und Merkmale der Erfindung werden nachfolgend anhand der in den Zeichnungen dargestellten Ausführungsbeispiele näher erläutert. Es zeigt:
Fig. 1 schematisch den Dachbereich eines Kabrioletts mit Faltverdeck,
Fig. 2 schematisch den Dachbereich eines Kabrioletts mit festem Klappdach,
Fig. 3 die Schnittansicht nach Linie III-III in Fig. 1 in vergrößerter Darstellung,
Fig. 4 die Schnittansicht nach Linie IV-IV in Fig. 2 in vergrößerter Darstellung,
Fig. 5 eine Fig. 4 entsprechende Schnittansicht durch eine andere Ausführungsform mit einem Wendeldrahtkörper als Armierung und
Fig. 6 bis 10 jeweils eine Draufsicht auf unterschiedliche Ausführungsformen geeigneter Armierungen aus Stanzband.

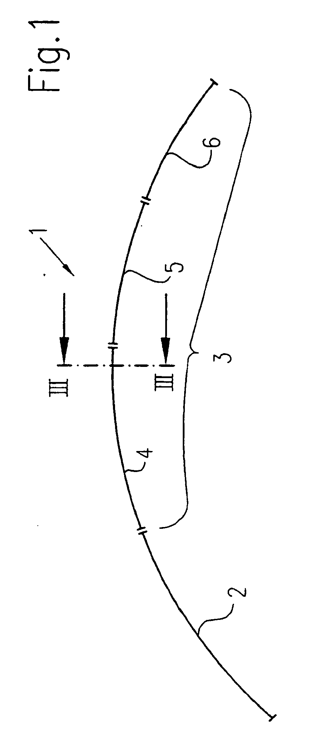

In Fig. 1 weist ein Dachrahmen 1 eines Kabrioletts in schematischer Darstellung eine A-Säule 2 sowie ein dreiteiliges Faltverdeck 3 mit einem Dachrahmen I 4, einem Dachrahmen II 5 und einem Dachrahmen III 6 auf.

In allen Zeichnungsfiguren sind gleiche Teile mit gleichen Bezugszahlen versehen.

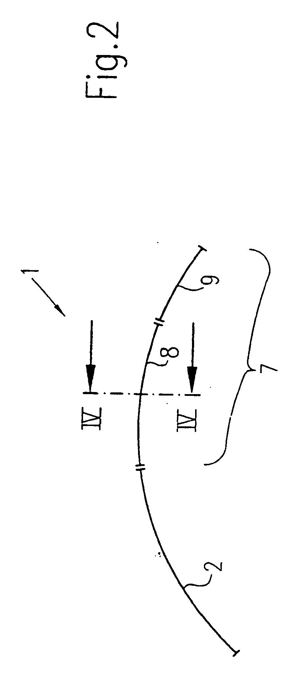

Fig. 2 zeigt den Dachrahmen 1 eines Kabrioletts, der die A-Säule 2 sowie ein zweiteiliges festes Klappdach 7 mit einem Dachrahmen I 8 und einem Dachrahmen II 9 aufweist.

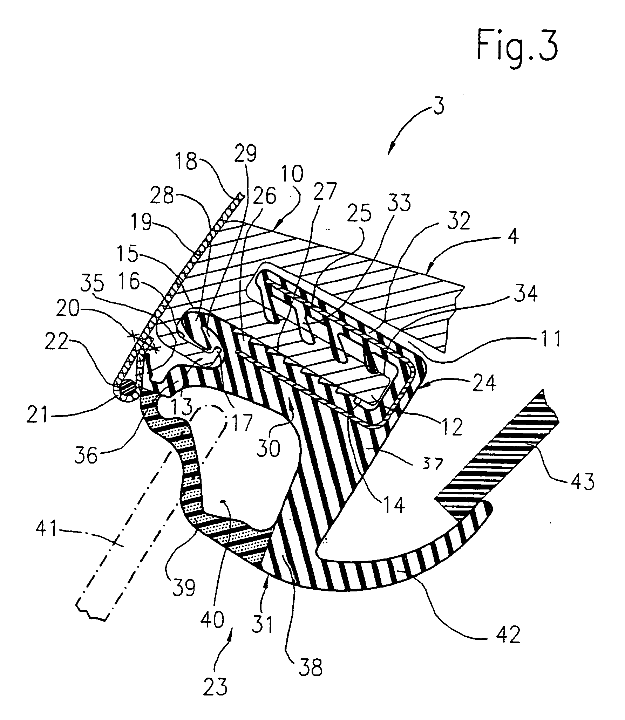

Gemäß Fig. 3 ist der Dachrahmen I 4 des Faltverdecks 3 mit einem dreidimensional geformten Anschlußteil 10 versehen, das z.B. aus Aluminiumguß besteht. Das Anschlußteil 10 weist eine Nut 11, einen Aufsteckflansch 12 und einen Randflansch 13 auf. Dem Randflansch 13 ist eine Dichtfläche 14 des Aufsteckflansches 12 zugewandt. Zwischen dem Randflansch 13 und der Dichtfläche 14 ist ein Längskanal 15 in dem Anschlußteil 10 ausgebildet. Eine Stützfläche 16 des Randflansches 13 liegt der Dichtfläche 14 im Abstand gegenüber. Der Randflansch 13 weist an seiner freien Längskante eine sich in den Längskanal 15 erstreckende Längsrippe 17 auf.

Ein Verdeckstoff 18 des Faltverdecks 3 ist über eine Stützfläche 19 des Anschlußteils 10 gezogen und an seiner freien Längskante mit einer durch eine Naht 20 gebildeten Schlaufe 21 versehen. In der Schlaufe ist ein Kunststoffstrang 22 des Faltverdecks 3 angeordnet.

Ein Dichtungsprofil 23 weist einen Halteabschnitt 24 von im wesentlichen U-förmiger Querschnittsfläche auf. In den Halteabschnitt 24 ist eine im Querschnitt ebenfalls U-förmige metallische Armierung 25 aus Stanzband eingebettet. Der Halteabschnitt 24 ist selbstklemmend und abdichtend auf den Aufsteckflansch 12 aufgesteckt. Ein erster Schenkel 26 des Halteabschnitts 24 ist mit einer längs durchgehenden, sägezahnähnlichen Profilierung 27 versehen, die an die Dichtfläche 14 angedrückt ist. Die Profilierung 27 sorgt labyrinthartig für eine sehr gute Abdichtung des Halteabschnitts 24 gegenüber dem Aufsteckflansch 12. Eine hakenartige Endlippe 28 des ersten Schenkels 26 ragt einerseits in den Längskanal 15 und andererseits in eine Längsnut 29 eines an den ersten Schenkel 26 seitlich angeformten Fußes 30 eines Dichtungsabschnitts 31 des Dichtungsprofils 23 hinein. Die Endlippe 28 liegt unter Vorspannung an der Stützfläche 16 an und verbessert die Dichtanlage des ersten Schenkels 26 an der Dichtfläche 14. Die freie Endkante der Endlippe 28 hintergreift in der montierten Endlage des Dichtungsprofils 23 die Längsrippe 17. Dadurch ergibt sich gewissermaßen eine formschlüssige Verriegelung des Dichtungsprofils 23 an dem Anschlußteil 10. Dabei greifen der Randflansch 13 und seine Längsrippe 17 in die Längsnut 29 ein.

Ein zweiter Schenkel 32 des Halteabschnitts 24 ist in der montierten Endlage des Halteabschnitts 24 in der Nut 11 angeordnet und weist an seiner Innenseite Rippen 33 auf, die in Fig. 3 in der üblichen Weise in ihrer voll entspannten Lage gezeichnet sind. Die Rippen 33 liegen in der montierten Endlage des Halteabschnitts 24 unter Vorspannung an einer Gegenfläche 34 des Aufsteckflansches 12 an. Die Rippen 33 fördern dadurch die Dichtanpressung des ersten Schenkels 26 an die Dichtfläche 14.

Der Fuß 30 weist außerhalb der Längsnut 29 eine unter Vorspannung abdichtend an der Schlaufe 21 des Verdeckstoffes 18 anliegende Dichtlippe 35 auf.

Die Längsnut 29 ist in einer ersten Längskante 36 des Fußes 30 ausgebildet. Von einer von der ersten Längskante 36 abgewandten zweiten Längskante 37 des Fußes 30 erstreckt sich ein Schenkel 38 des Dichtungsprofils 23 unter einem Winkel von etwa 90° nach außen. Zwischen einer freien Längskante des Schenkels 38 und der ersten Längskante 36 des Fußes 30 ist eine Membran 39 des Dichtungsprofils 23 befestigt. Dadurch entsteht in dem Dichtungsprofil 23 ein Hohlraum 40. Eine heb- und senkbare seitliche Fensterscheibe 41 des Kabrioletts ist in ihrer obersten, geschlossenen Endstellung in Fig. 3 strichpunktiert eingetragen. In dieser Endstellung liegt die Fensterscheibe 41 abgedichtet an der Membran 39 an.

Auf der der Membran 39 gegenüberliegenden Seite der freien Längskante des Schenkels 38 ist eine Abdecklippe 42 angeformt, die in der montierten Endlage eine Innenverkleidung 43 des Kabrioletts übergreift.

Der Halteabschnitt 24 - mit Ausnahme seiner Armierung 25 -, der Fuß 30, die Dichtlippe 35, der Schenkel 38 und die Abdecklippe 42 bestehen aus Weichgummi, während die Membran 39 aus Moosgummi hergestellt ist.

Bei dem Ausführungsbeispiel gemäß Fig. 4 ist das dreidimensional geformte Anschlußteil 10 des Dachrahmens I 8 mit einem Flansch 44 versehen. Um den Flansch 44 herum ist ein lackiertes, sichtbares Außenblech 45 eines zugehörigen Dachteils 46 des Klappdachs 7 herumgebördelt. Das Außenblech 45 weist einen nach innen abgebogenen, formstabilen Randflansch 47 auf, der in die Längsnut 29 in dem Fuß 30 eingreift.

Das Außenblech 45 kann z.B. mit dem Flansch 44 verklebt sein. Die Dichtlippe 35 liegt in der montierten Endstellung des Dichtungsprofils 23 abdichtend an dem Außenblech und/oder an dem Randflansch 47 an. An der ersten Längskante 36 des Fußes 30 und an dem ersten Schenkel 26 des Halteabschnitts 24 ist eine Dichtkante 48 aus Weichgummi angeformt. Die Dichtkante 48 liegt unter Vorspannung einerseits an dem Randflansch 47 und andererseits, ebenfalls unter Vorspannung, an der Dichtfläche 14 des Aufsteckflansches 12 an. Durch den Randflansch 47 werden die Dichtkante 48 und der erste Schenkel 26 in gut dichtender Anlage an der Dichtfläche 14 gehalten. Die Dichtkante 48 hintergreift in der montierten Endlage gemäß Fig. 4 den Randflansch 47 und sorgt auf diese Weise für eine gewisse formschlüssige Verriegelung des Dichtungsprofils 23 an dem Anschlußteil 10.

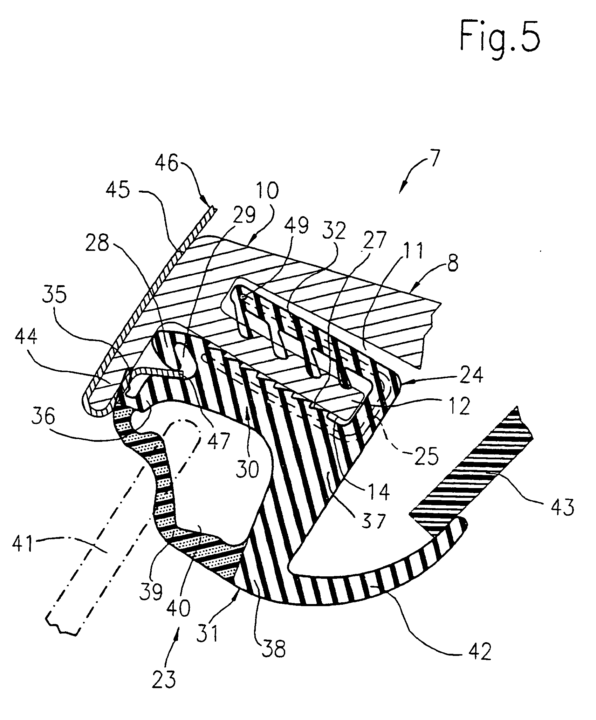

Das Ausführungsbeispiel gemäß Fig. 5 ähnelt demjenigen gemäß Fig. 4. In Fig. 5 weist allerdings die metallische Armierung 25 einen Wendeldrahtkörper 49 an sich bekannter Machart auf. Anstelle der Dichtkante 48 gemäß Fig. 4 ist in Fig. 5 die hakenartige Endlippe 28 gemäß Fig. 3 verwendet. Diese Endlippe 28 liegt unter Vorspannung auf der in Fig. 5 oberen Seite des Randflansches 47 an und verriegelt auf diese Weise das Dichtungsprofil 23 gegenüber dem Anschlußteil 10.

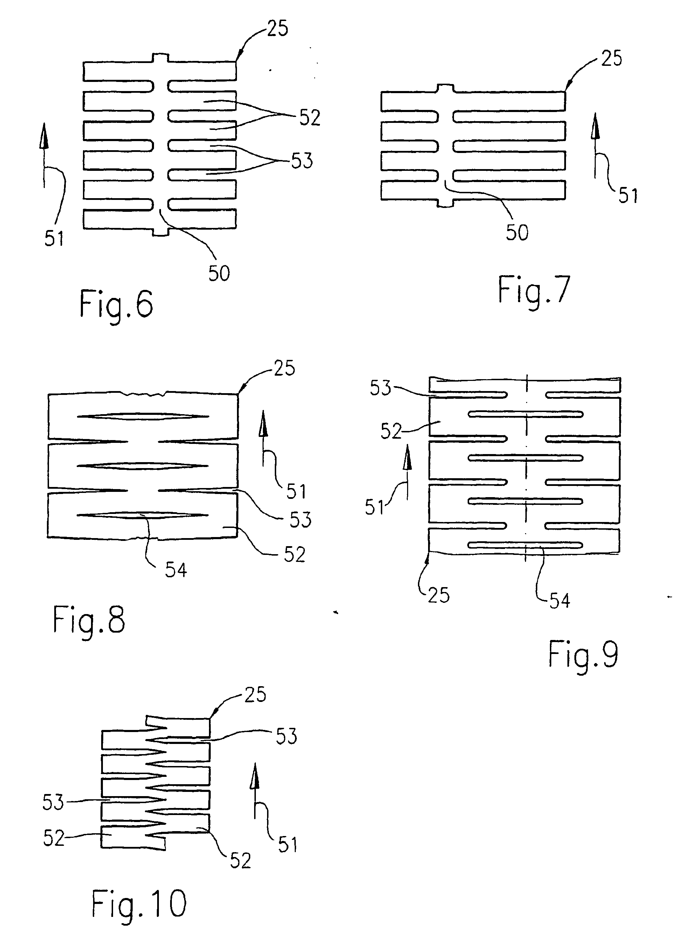

Die Fig. 6 bis 10 zeigen jeweils unterschiedliche Ausbildungen der metallischen Armierung 25 als Stanzbänder.

Die Armierungen 25 gemäß den Fig. 6 und 7 weisen jeweils einen durchgehenden Längssteg 50 auf, der eine Dehnung oder Stauchung der Armierung 25 in einer Längsrichtung 51 verhindert. Außerhalb des Längsstegs 50 sind im Wechsel Zungen 52 und Aussparungen 53 vorgesehen, die eine gute dreidimensionale Biegbarkeit des Halteabschnitts 24 (Fig. 3 bis 5) und des zugehörigen Dichtungsabschnitts 31 ermöglichen.

Die Armierungen 25 gemäß den Fig. 8 und 9 weisen zusätzlich Querschlitze 54 auf, die auch eine Dehnung oder Stauchung der Armierung 25 in der Längsrichtung 51 gestatten.

Die gleiche Wirkung wird gemäß Fig. 10 dadurch erreicht, dass die Aussparungen 53 sich quer zu der Längsrichtung 51 überlappen.

## Patentansprüche

1. Dichtungsprofil (23) zur Abdichtung einer heb- und senkbaren seitlichen Fensterscheibe (41) gegenüber einem Dachrahmen eines Kabrioletts, wobei das Dichtungsprofil (23) einen mit einer metallischen Armierung (25) koextrudierten Elastomerprofilstrang aufweist, wobei das Dichtungsprofil (23) dreidimensional geformt und an Anschlussteilen (10) des Dachrahmens festlegbar ist, wobei das Dichtungsprofil (23) einen Halteabschnitt (24) von im wesentlichen U-förmiger Querschnittsfläche aufweist, wobei der Halteabschnitt (24) ein Teil des Elastomerprofilstranges ist und die im Querschnitt ebenfalls U-förmige Armierung (25) eingebettet enthält, wobei der Halteabschnitt (24) *selbstklemmend* und abdichtend auf einen Aufsteckflansch (12) des Anschlussteiles (10) aufsteckbar ist, wobei ein Dichtungsabschnitt (31) des Elastomerprofilstranges seitlich an einen ersten Schenkel (26) des Halteabschnitts (24) angeformt ist, wobei der Dichtungsabschnitt (31) einen an den ersten Schenkel (26) angeformten Fuß (30) aufweist, wobei in einer ersten Längskante (36) des Fußes (30) eine Längsnut (29) ausgebildet ist, in die ein formstabiler Randflansch (13; 47) eines Daches des Kabrioletts eingreift, **dadurch gekennzeichnet, dass** zwischen einer Stützfläche (16) des Randflansches (13; 47) und der dieser zugewandten Dichtfläche (14) des Aufsteckflansches (12) ein Längskanal (15) ausgebildet ist, dass eine freie Längskante des ersten Schenkels (26) des Halteabschnitts (24) im Zusammenwirken mit dem Randflansch (13; 47) an die Dichtfläche (14) des Aufsteckflansches (12) andrückbar ist, dass eine hakenartige Endlippe (28) des ersten Schenkels (26) in den Längskanal (15) hineinragt, dass die Endlippe (28) unter Vorspannung an der der Dichtfläche (14) zugewandten Stützfläche (16) des Randflansches (13) anliegt und eine sich in Richtung der Dichtfläche (14) erstreckende Längsrippe (17) des Randflansches (13) verriegelnd hintergreift.

2. Dichtungsprofil nach Anspruch 1, **dadurch gekennzeichnet, dass** der Randflansch (47) ein Bestandteil eines Außenbleches (45) eines Dachteiles (46) eines festen Klappdaches (7) ist.

3. Dichtungsprofil nach Anspruch 1, **dadurch gekennzeichnet, dass** der Randflansch (13) an dem Anschlussteil (10) des Dachrahmens (4) ausgebildet ist.

4. Dichtungsprofil nach einem der Ansprüche 1 bis 3, **dadurch gekennzeichnet, dass** der Fuß (30) außerhalb der Längsnut (29) eine unter Vorspannung abdichtend an dem Dach anliegende Dichtlippe (35) aufweist.

5. Dichtungsprofil nach Anspruch 4, **dadurch gekennzeichnet, dass** die Dichtlippe (35) an einer Längskante (21) eines Verdeckstoffes (18) eines Faltverdeckes (3) anliegt.

6. Dichtungsprofil nach Anspruch 4, **dadurch gekennzeichnet, dass** die Dichtlippe (35) an dem Außenblech (45) des Dachteils (46) des festen Klappdaches (7) anliegt.

7. Dichtungsprofil nach einem der Ansprüche 1 bis 6, **dadurch gekennzeichnet, dass** sich von einer von der ersten Längskante (36) abgewandten zweiten Längskante (37) des Fußes (30) ein Schenkel (38) des Elastomerprofilstranges unter einem Winkel nach außen erstreckt, und dass zwischen einer freien Längskante des Schenkels (38) und der ersten Längskante (36) des Fußes (30) eine Membran (39) des Elastomerprofilstranges befestigt ist und einen Hohlraum (40) in dem Elastomerprofilstrang schafft.

8. Dichtungsprofil nach Anspruch 7, **dadurch gekennzeichnet, dass** die Fensterscheibe (41) in ihrem obersten Wegbereich in dichtende Berührung mit der Membran (39) tritt.

9. Dichtungsprofil nach Anspruch 7 oder 8, **dadurch gekennzeichnet, dass** der Fuß (30) und der Schenkel (38) aus Weichgummi und die Membran (39) aus Moosgummi bestehen.

10. Dichtungsprofil nach einem der Ansprüche 1 bis 9, **dadurch gekennzeichnet, dass** die metallische Armierung (25) aus einem Stanzband besteht.

11. Dichtungsprofil nach einem der Ansprüche 1 bis 10, **dadurch gekennzeichnet, dass** die metallische Armierung (25) einen Wendeldrahtkörper aufweist.

## Claims

1. Profiled seal (23) for providing a sealing arrangement between a lateral window pane (41), which can be raised and lowered, and a roof frame of a cabriolet, wherein the profiled seal (23) comprises a length of profiled elastomer which is co-extruded with a metal reinforcement (25), wherein the profiled seal (23) has a three-dimensional shape and can be fixed to connection parts (10) of the roof frame, wherein the profiled seal (23) comprises a holding section (24) which has a substantially U-shaped cross-section, wherein the holding section (24) is part of the length of profiled elastomer and contains the embedded reinforcement (25) which likewise has a U-shaped cross-section, wherein the holding section (24) can be placed on an attachment flange (12) of the connection part (10) in a self-clamping and sealing manner, wherein a sealing section (31) of the length of profiled elastomer is integrally formed laterally on a first limb (26) of the holding section (24), wherein the sealing section (31) comprises a foot (30) formed onto the first limb (26), wherein a longitudinal groove (29) is formed in a first longitudinal edge (36) of the foot (30), a dimensionally stable edge flange (13; 47) of a roof of the cabriolet engaging in said longitudinal groove, **characterised in that** a longitudinal channel (15) is formed between a supporting surface (16) of the edge flange (13; 47) and the sealing surface (14) of the attachment flange (12) facing thereto, **in that** a free longitudinal edge of the first limb (26) of the holding section (24) can be pressed in co-operation with the edge flange (13; 47) on the sealing surface (14) of the attachment flange (12), **in that** a hook-shaped end lip (28) of the first limb (26) protrudes into the longitudinal channel (15), **in that** the end lip (28) lies prestressed against the supporting surface (16), facing the sealing surface (14), of the edge flange (13) and engages in a locking manner behind a longitudinal rib (17) of the edge flange (13), which rib extends in the direction of the sealing surface (14).

2. Profiled seal according to claim 1, **characterised in that** the edge flange (47) is a component of an outer metal sheet (45) of a roof part (46) of a hard folding roof (7).

3. Profiled seal according to claim 1, **characterised in that** the edge flange (13) is formed on the connection part (10) of the roof frame (4).

4. Profiled seal according to any one of claims 1 to 3, **characterised in that** the foot (30) comprises outside the longitudinal groove (29) a sealing lip (35) which lies prestressed in a sealing manner against the roof.

5. Profiled seal according to claim 4, **characterised in that** the sealing lip (35) lies against a longitudinal edge (21) of a cover material (18) of a folding roof cover (3).

6. Profiled seal according to claim 4, **characterised in that** the sealing lip (35) lies against the outer metal sheet (45) of the roof part (46) of the hard folding roof (7).

7. Profiled seal according to any one of claims 1 to 6, **characterised in that** a limb (38) of the length of profiled elastomer extends outwards at an angle from a second longitudinal edge (37), remote from the first longitudinal edge (36), of the foot (30), and **in that** a membrane (39) of the length of profiled elastomer is attached between a free longitudinal edge of the limb (38) and the first longitudinal edge (36) of the foot (30) and produces a hollow cavity (40) in the length of profiled elastomer.

8. Profiled seal according to claim 7, **characterised in that** the window pane (41) comes into sealing contact with the membrane (39) when the pane is in the uppermost region of its travel.

9. Profiled seal according to claim 7 or 8, **characterised in that** the foot (30) and the limb (38) consist of soft rubber and the membrane (39) consists of expanded rubber.

10. Profiled seal according to any one of claims 1 to 9, **characterised in that** the metal reinforcement (25) consists of a punched strip.

11. Profiled seal according to any one of claims 1 to 10, **characterised in that** the metal reinforcement (25) comprises a twisted wire body.

## Revendications

1. Joint d'étanchéité profilé (23) pour assurer l'étanchéité de la jonction d'une vitre de fenêtre latérale coulissante (41) avec le cadre du toit d'un cabriolet,
dans lequel le joint d'étanchéité profilé (23) présente un élément en élastomère profilé coextrudé avec une armature métallique (25),
dans lequel le joint d'étanchéité profilé (23) est formé en trois dimensions et est ajustable aux éléments de raccordement (10) du cadre du toit,
dans lequel le joint d'étanchéité profilé (23) présente un élément de fixation (24) de section sensiblement en U,
dans lequel l'élément de fixation (24) constitue une partie de l'élément en élastomère profilé et contient coulée en lui l'armature, dont la section est également en forme de U (25),
dans lequel l'élément de fixation (24) peut être fixé sur une bride de fixation (12) de l'élément de raccordement (10) de manière autoadhésive et assurant une jonction étanche,
dans lequel une section de joint (31) de l'élément en élastomère profilé est formée latéralement sur une première branche (26) de l'élément de fixation (24),
dans lequel la section de joint (31) présente un pied (30) formé sur la première branche (26),
dans lequel une rainure longitudinale (29) est constituée dans une arête longitudinale (36) du pied (30), dans laquelle s'enclenche une bride indéformable (13 ; 47) du bord du toit du cabriolet,
**caractérisé en ce que**,
un canal longitudinal (15) est formé entre une surface d'appui (16) de la bride de bord (13 ; 47) et la surface d'étanchéité (14) de la bride d'emboîtement (12) orientée vers la bride de bord,
**en ce qu'**une arête longitudinale libre de la première branche (26) de l'élément de fixation (24) peut être pressée contre la surface d'étanchéité (14) de la bride d'emboîtement (12) en collaboration avec la bride de bord (13 ; 47),
**en ce qu'**une lèvre d'extrémité en forme de crochet (28) de la première branche (26) s'emboîte dans le canal longitudinal (15),
**en ce que** la lèvre d'extrémité (28) s'appuie sous précontrainte contre la surface portante (16) de la bride de bord (13) orientée vers la surface d'étanchéité (14), et s'emboîte, en produisant un verrouillage, dans une nervure longitudinale (17) de la bride de bord (13) s'étendant dans la direction de la surface d'étanchéité (14).

2. Joint d'étanchéité profilé selon la revendication 1, **caractérisé en ce que** la bride de bord (47) est partie intégrante d'une tôle externe (45) d'une partie de toit (46) d'un toit ouvrant rigide (7).

3. Joint d'étanchéité profilé selon la revendication 1, **caractérisé en ce que** la bride de bord (13) est constituée sur l'élément de raccordement (10) du cadre du toit (4).

4. Joint d'étanchéité profilé selon l'une quelconque des revendications 1 à 3, **caractérisé en ce que** le pied (30) présente, à l'extérieur de la rainure longitudinale (29), une lèvre d'étanchéité (35) appuyée sous précontrainte contre le toit pour assurer l'étanchéité.

5. Joint d'étanchéité profilé selon la revendication 4, **caractérisé en ce que** la lèvre d'étanchéité (35) est appuyée contre une arête longitudinale (21) de la toile (18) d'une capote pliable (3).

6. Joint d'étanchéité profilé selon la revendication 4, **caractérisé en ce que** la lèvre d'étanchéité (35) s'appuie contre la tôle externe (45) de la partie du toit (46) d'un toit ouvrant rigide (7).

7. Joint d'étanchéité profilé selon l'une quelconque des revendications 1 à 6, **caractérisé en ce qu'**une branche (38) de l'élément en élastomère profilé s'étend diagonalement vers l'extérieur à partir d'une deuxième arête longitudinale (37) du pied (30) dérivée de la première arête longitudinale (36), et
**en ce qu'**une membrane (39) de l'élément en élastomère profilé est fixée entre une arête longitudinale libre de la branche (38) et la première arête longitudinale (36) du pied (30) et forme une cavité (40) dans l'élément en élastomère profilé.

8. Joint d'étanchéité profilé selon la revendication 7, **caractérisé en ce que** la vitre de fenêtre (41) entre en contact avec la membrane (39) à l'extrémité supérieure de sa course et assure ainsi l'étanchéité.

9. Joint d'étanchéité profilé selon l'une des revendications 7 ou 8, **caractérisé en ce que** le pied (30) et la branche (38) sont faits en caoutchouc souple et que la membrane (39) est faite en caoutchouc souple.

10. Joint d'étanchéité profilé selon l'une quelconque des revendications 1 à 9, **caractérisé en ce que** l'armature métallique (25) est constituée d'une bande à estamper.

11. Joint d'étanchéité profilé selon l'une quelconque des revendications 1 à 10, **caractérisé en ce que** l'armature métallique (25) possède un élément en fil spirale.
